# EUROPÄISCHE PATENTANMELDUNG

(11) **EP 1 804 033 A2**
(43) Veröffentlichungstag der Anmeldung: **04.07.2007**
(21) Anmeldenummer: 06125106.2
(22) Anmeldetag: 30.11.2006
(51) Int. Cl.: G01D 5/244

(54) **Verfahren und Vorrichtung zum Bereitstellen eines hochaufgelösten Winkelmarkensignals**

(30) Priorität: 29.12.2005 AT 9002005 U
(71) Anmelder: AVL List GmbH, 8020 Graz (AT)
(72) Erfinder: Moik, Josef, 8047, Graz (AT); Semanek, Thomas, 8111, Judendorf (AT); Summerauer, Franz, 8121, Deutsch-Feistritz (AT)
(74) Vertreter: Laminger, Norbert

(57) **Zusammenfassung**

Ein Verfahren zum Bereitstellen eines hochaufgelösten Winkelmarkensignals umfasst die Erfassung eines Winkelmarkensignales geringer Auflösung als auch eines Umdrehungstriggers. Aus den Winkelmarken geringer Auflösung werden dann Winkelmarken mit einer um einen vorgebbaren Vervielfachungsfaktor erhöhten Frequenz erzeugt.

Um auch bei hochdynamischen Drehzahländerungen eine genaue Vervielfachung des Kurbelwinkelsignals zu erreichen, so dass zwischen den erzeugten Ausgangsmarken und ihrer theoretisch korrekten Position mit großer Wahrscheinlichkeit eine nur mehr vernachlässigbare Abweichung besteht, werden die seit Auftreten des Umdrehungstriggers erzeugten Ausgangswinkelmarken hoher Auflösung laufend gezählt und wird dieser Zählwert jeweils beim Eintreffen einer neuen Eingangswinkelmarke mit dem durch Zählen der Eingangswinkelmarken seit dem Auftreten des Umdrehungstriggers und Multiplikation mit dem Vervielfachungsfaktor errechneten Wert verglichen, und wird die Frequenz der Ausgangswinkelmarken ab der neuen Eingangswinkelmarke in Abhängigkeit von dieser Abweichung korrigiert.

## Beschreibung

Die Erfindung betrifft ein Verfahren zum Bereitstellen eines hochaufgelösten Winkelmarkensignals, wobei ein Winkelmarkensignal geringer Auflösung als auch ein Umdrehungstrigger erfasst werden, wobei letzterer auch aus einer Lücke im Winkelmarkensignal geringer Auflösung synthetisiert werden kann, und wobei aus den Winkelmarken geringer Auflösung Winkelmarken mit einer um einen vorgebbaren Vervielfachungsfaktor erhöhten Frequenz erzeugt werden, sowie eine Vorrichtung zur Durchführung des Verfahrens, Vorrichtung zur Durchführung des Verfahrens, mit einem Eingang für ein Winkelmarkensignal geringer Auflösung sowie ein Umdrehungstriggersignal, einem Modul zur hochaufgelösten Vermessung der eingehenden Winkelmarkensignale, einem Markenerzeugermodul zur Erzeugung von frequenzvervielfachten Winkelmarken, und einem Berechnungsmodul zur Steuerung des Markenerzeugermoduls.

Zur Abstimmung und Entwicklung von Motorsteuergeräten im Fahrzeugen werden im vermehrten Maß Indiziersysteme eingesetzt. Diese Messsysteme erfassen Größen wie den Zylinderdruck kurbelwinkelsynchron und führen Kennwertberechnungen in Echtzeit durch. Dazu ist aber ein hochaufgelöstes Kurbelwinkelsignal als Abtastbasis erforderlich. Im Fahrzeug sind aber optische Präzisionswinkelaufnehmer schwer zu montieren. Aus diesem Grund muss häufig mit kodierten Scheiben mit grober Auflösung (z.B. 60-2 Zähne) oder Zahnkränzen das Auslangen gefunden werden. Diese Winkelsignale müssen nun durch geeignete Maßnahmen möglichst genau auf die gewünschte Winkelauflösung (z.B. 0.1 Grad) hochmultipliziert werden. Bei kodierten Scheiben (60-2) muß zusätzlich aus der Lücke ein Umdrehungstriggersignal (OT Signal) abgeleitet werden. Bei Zahnkranzaufnehmern ist ein zusätzlicher Geber für das OT Signal (z.B. Nockenwellensensor) erforderlich.

Bisher bekannte Implementierungen dieser Aufgabenstellung, d.h. herkömmliche Kurbelwinkelrechner, lösen die Aufgabenstellung durch Vermessung der Periodendauer der Eingangsmarken mit einer hochfrequenten Zeitbasis (z.B. 20 MHz), Ermittlung einer Sollfrequenz , die die Vervielfachung widerspiegelt, und Einstellung derselben an einem digitalen Pulserzeuger. Dabei berücksichtigen bisher bekannte Implementierungen durchaus auch die Tatsache , daß bei kodierten Scheiben auf Grund eines oder mehrerer fehlender Zähne sich zwischendurch eine zwei- oder mehrfache Periodendauer ergibt, was nicht zu einer fehlerhaften Verstellung der Ausgangsfrequenz führen darf.

Da immer die Periodendauer der vorigen Eingangsmarke zur Anpassung der aktuellen Ausgangsmarkenfrequenz und damit Periodendauer der gerade erzeugten Ausgangsmarken verwendet wird, ergeben sich bei hohen Vervielfachungen und starker Drehzahldynamik Abweichungen , die sich innerhalb einer Umdrehung aufakkumulieren können. Indiziersysteme überwachen aber kontinuierlich die Anzahl der Winkelmarken zwischen zwei Umdrehungstriggern. Entspricht die Markenanzahl nicht dem erwarteten Wert, so werden Synchronisationsfehler gemeldet und es können keine korrekten Indiziermessungen durchgeführt werden.

Die Aufgabe der vorliegenden Erfindung war daher ein Verfahren bzw. eine Vorrichtung, mit welchem auch bei hochdynamischen Drehzahländerungen eine genaue Vervielfachung eines Kurbelwinkelsignals zu erreichen ist , sodass sich zwischen den erzeugten Ausgangsmarken und ihrer theoretisch korrekten Position mit großer Wahrscheinlichkeit eine nur mehr vernachlässigbare Abweichung ergibt.

Zur Lösung dieser Aufgabe ist das eingangs beschriebene Verfahren dadurch gekennzeichnet, daß die seit Auftreten des Umdrehungstriggers erzeugten Ausgangswinkelmarken hoher Auflösung laufend gezählt werden und dieser Zählwert jeweils beim Eintreffen einer neuen Eingangswinkelmarke mit dem durch Zählen der Eingangswinkelmarken seit dem Auftreten des Umdrehungstriggers und Multiplikation mit dem Vervielfachungsfaktor errechneten Wert verglichen wird, und dass die Frequenz der Ausgangswinkelmarken ab der neuen Eingangswinkelmarke in Abhängigkeit von dieser Abweichung korrigiert wird. Damit ist eine Korrektur möglich, welche selbst bei hochdynamischen Drehzahländerungen eine genauere Markenvervielfachung über die gesamte Umdrehung ermöglicht, indem Abweichungen sofort ausgeglichen werden und somit eine Kumulierung von Fehlern verhindert wird.

Gemäß einer vorteilhaften Ausführungsform der Erfindung ist vorgesehen, daß zusätzlich zur Anzahl der seit Auftreten des Umdrehungstriggers erzeugten Ausgangswinkelmarken hoher Auflösung auch der prozentuell abgelaufene Anteil der Periodendauer der aktuell anliegenden Ausgangswinkelmarke zum Zeitpunkt des Eintreffens einer neuen Eingangswinkelmarke ermittelt wird, dass die Frequenz der Ausgangswinkelmarken ab der neuen Eingangswinkelmarke weiter in Abhängigkeit von diesem verfeinerten Abweichungswert durchgeführt wird. Dadurch kann die Abweichung zwischen dem Istwert der erzeugten Winkelmarken hoher Auflösung und ihrem Sollwert zum Zeitpunkt des Eintreffens einer Eingangsmarke nicht nur ganzzahlig sondern auch in Bruchteilen angegeben werden. Durch dieses Prinzip wird auch eine genaue Vervielfachung von Winkelmarken um einen nicht ganzzahligen Faktor ermöglicht, wie es z.B. beim Abgriff von Marken eines Schwungradzahnkranzes - bei welchem die Zahnanzahl häufig eine Primzahl ist - erforderlich ist. Aber auch bei ganzzahligen Vervielfachungsfaktoren ist auf diese Weise eine noch präzisere Markenvervielfachung auch bei hochdynamischen Drehzahländerungen möglich. Weiters wird damit auch ein eventuelles "Pumpen" der digitalen Regelschleife verhindert.

Gemäß einem weiteren Merkmal der vorliegenden Erfindung ist das Verfahren weiters dadurch gekennzeichnet, dass zusätzlich die Periodendauern einer vorgebbaren Anzahl von Eingangswinkelmarken gespeichert werden, dass aus den gespeicherten Werten die Periodendauer der nächsten Eingangswinkelmarke extrapoliert wird, und dass die Frequenz der Ausgangswinkelmarken in Abhängigkeit von der Abweichung zwischen dem Wert der Periodendauer der letzen erfassten Eingangswinkelmarke und dem extrapolierten Wert der Periodendauer korrigiert wird. Damit ist eine Vorausberechnung der Änderung der Momentandrehzahl möglich, wobei auf diese Weise wird die Periodendauer der nächsten Eingangsmarke quasi vorhergesehen und damit die Abweichungen der erzeugten Winkelmarken, die erst nach der nächsten Eingangsmarke sichtbar würden, vorausschauend kompensiert wird. Dies ist in besonderem Maße bei schnellen Änderungen der Momentandrehzahl die sich beispielsweise durch starke Drehschwingungen oder durch hochtransiente Vorgänge - etwa beim Start des Motors - ergeben.

Für eine raschestmögliche Berechnung des Korrekturwerts mit geringstmöglichem Aufwand ist dabei vorgesehen, daß die Periodendauer linear extrapoliert wird.

Um eine sehr genaue Extrapolation zu erhalten, kann die Periodendauer durch Polynomapproximation extrapoliert wird.

Gemäß einer weiteren erfindungsgemäßen Ausführungsform des Verfahrens ist vorgesehen, daß die Korrekturwerte für die Ausgangswinkelmarken mit vorgebbaren Faktoren verknüpft werden. Auf diese Weise ist die Ansprechdynamik des Korrekturverfahrens steuerbar und kann an die Präzision der verwendeten Zahnscheiben als auch an die Größe der Vervielfachung angepasst werden

Vorteilhafterweise werden dabei die Faktoren proportional zum Vervielfachungsfaktor für die Frequenz der Ausgangswinkelmarken eingestellt.

Gemäß einer weiteren erfindungsgemäßen Ausführungsform des Verfahrens ist vorgesehen, daß die Anpassung der Frequenz der Ausgangswinkelmarken asynchron zu den erzeugten Ausgangswinkelmarken erfolgt. Damit wird nicht die aktuell erzeugte Ausgangsmarke abgewartet und erst die nächste mit der neugerechneten Periodendauer erzeugt, sondern es wird noch die Periodendauer der aktuell anliegenden Ausgangsmarke unmittelbar beeinflusst. Auf diese Weise kann die Reaktionszeit und damit die Genauigkeit der Vervielfachungsschaltung weiter erhöht werden

Die eingangs beschriebene Vorrichtung zur Durchführung des Verfahrens ist zur Lösung der gestellten Aufgabe gekennzeichnet durch gekennzeichnet durch ein Zählmodul für die seit Auftreten des Umdrehungstriggersignals vom Markenerzeugermodul erzeugten Ausgangswinkelmarken, einem Zählmodul für die erfassten Eingangsmarken und einem Vergleichsmodul, in welchem die Anzahl der seit Auftreten des Umdrehungstriggers erzeugten Ausgangswinkelmarken hoher Auflösung jeweils beim Eintreffen einer neuen Eingangswinkelmarke mit dem durch Zählen der Eingangswinkelmarken seit dem Auftreten des Umdrehungstriggers und Multiplikation mit dem Vervielfachungsfaktor errechneten Wert verglichen wird, und welches Vergleichsmodul einen Korrekturwert ermittelt, sowie ein Korrekturmodul zur Korrektur der Einstellwerte des Markenerzeugermoduls in Abhängigkeit vom Korrekturwert des Vergleichsmoduls. Damit ist eine genauere Markenvervielfachung als bei herkömmlichen Vorrichtungen möglich, die selbst bei hochdynamischen Drehzahländerungen und über die gesamte Umdrehung erfolgen, wobei Abweichungen sofort ausgeglichen werden und somit eine Kumulierung von Fehlern verhindert wird.

Gemäß einer vorteilhaften erfindungsgemäßen Ausführungsform wird im Zählmodul zusätzlich auch der prozentuell abgelaufene Anteil der Periodendauer der aktuellen Ausgangsmarke zum Zeitpunkt des Eintreffens einer Eingangsmarke ermittelt und wird dieser Wert ebenfalls dem Vergleichsmodul zugeführt, um so die Abweichung zwischen dem Istwert der erzeugten Winkelmarken und ihrem Sollwert auch in Bruchteilen angeben zu können. Damit ist eine genaue Vervielfachung von Winkelmarken um einen nicht ganzzahligen Faktor ermöglicht bzw. auch bei ganzzahligen Vervielfachungsfaktoren eine noch präzisere Markenvervielfachung auch bei hochdynamischen Drehzahländerungen möglich. Eine Änderung der Frequenz kann unmittelbar erfolgen, d.h. sich auf die Periodendauer der gerade erzeugten Marke unmittelbar auswirken, wobei nicht erst deren Ende abgewartet werden muß.

Gemäß einem weiteren Merkmal der Erfindung sind ein Puffermodul zur Zwischenspeicherung der Periodendauern einer vorgebbaren Anzahl von Eingangsmarken und ein Extrapolationsmodul vorgesehen, in welchem daraus eine zu erwartende Periodendauer für die nächste Eingangsmarke extrapoliert wird, wobei im Korrekturmodul der Einstellwert für das Markenerzeugermodul abhängig von der Differenz zwischen der extrapolierten Periodendauer und der tatsächlichen Periodendauer der letzen Marke korrigiert wird. Durch eine derartige Vorausberechnung der Änderung der Momentandrehzahl kann die Periodendauer der nächsten Eingangsmarke quasi vorhergesehen werden, so daß Abweichungen der erzeugten Winkelmarken, die erst nach der nächsten Eingangsmarke sichtbar würden, vorausschauend kompensiert werden können.

Gemäß einer weiteren vorteilhaften erfindungsgemäßen Ausführungsform sind zumindest im Vergleichsmodul und im Extrapolationsmodul Abfrageroutinen implementiert, durch welche Werte eingegeben werden können, mit welchen die dem Korrekturmodul zugeführten Werte verknüpft werden, so daß die Dynamik des Nachregelverhalten der Vervielfachungsschaltung optimiert werden kann.

Gemäß einer weiteren vorteilhaften erfindungsgemäßen Ausführungsform sind das Zählmodul als auch das Modul zur hochaufgelösten Vermessung der eingehenden Winkelmarkensignale und das Markenerzeugermodul zur Erzeugung von frequenzvervielfachten Winkelmarken als Schaltungsteile in einem freiprogrammierbaren GateArray (FPGA) ausgeführt.

Vorteilhafterweise ist weiters vorgesehen, daß das Berechnungsmodul zur Steuerung des Markenerzeugermoduls, das Zählmodul für die erfassten Eingangsmarken, das Vergleichsmodul, das Korrekturmodul, das Puffermodul und das Extrapolationsmodul als Softwaremodule in einem Signalprozessor ausgeführt sind.

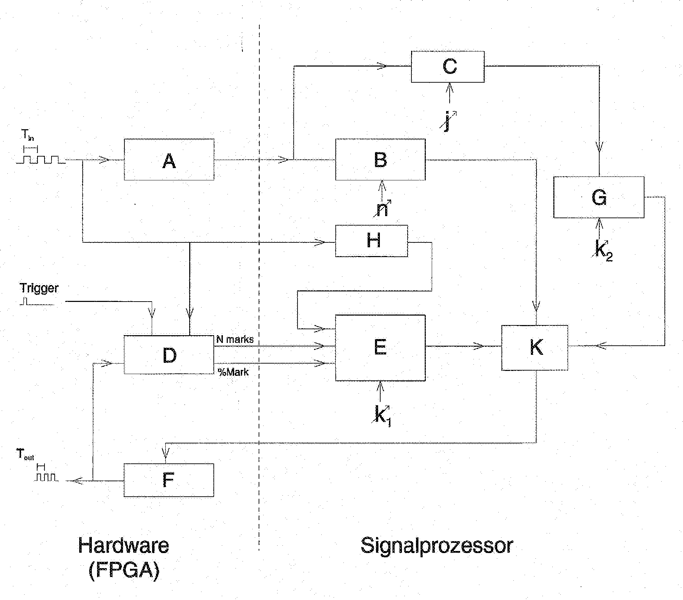

In der nachfolgenden Beschreibung soll die Erfindung anhand eines Ausführungsbeispieles und unter Bezugnahme auf die beigefügte Zeichnung, welche in schematischer Darstellung das Verfahrensprinzip zeigt, näher erläutert werden.

In dieser beispielhaften Umsetzung sind gewisse funktionale Module als Hardwareschaltung in einem FPGA andere hingegen als Softwaremodule eines Signalprozessors implementiert. Auf diese Art und Weise können eine hohe Performance als auch eine hohe Flexibilität zugleich erzielt werden.

Schaltung A vermißt mit hoher Auflösung (z.B. 50 MHz) die Periodendauer (Tin) der Eingangsmarken (Signal A) und löst zugleich bei jeder Marke einen Interrupt an einem Signalprozessor aus. Dieser liest im Programmteil B die aktuelle Periodendauer ein und errechnet daraus die um die gewünschte Vervielfachung (n) erhöhte Ausgangsmarkenfrequenz, die von Schaltung (F) erzeugt wird. Dabei werden fehlende Zähne, wie sie bei kodierten Scheiben (60-2) vorkommen ebenfalls detektiert und die vermessene Periodendauer einer solchen verlängerten Eingangsmarke auf die Dauer eine normalen Marke rückgerechnet.

Schaltung (F) ist dabei als Zähler implementiert, der ebenfalls mit hoher Auflösung (z.B. 50 MHz) solange hochzählt, bis sein Wert einem vorladbarem Vergleichswert entspricht. Dann wird eine Ausgangsmarke (Signal B) erzeugt , der Zähler rückgesetzt und von Neuem zum Hochzählen freigegeben. Damit ist die Periodendauer der erzeugten Marken direkt proportional zum aktuell vorgeladenen Vergleichswert. Der Vergleichswert kann dabei auch während des Zählvorgangs geändert werden, sodaß der vom Signalprozessor ermittelte neue Wert unmittelbar eingestellt werden kann und sich auch auf die Dauer der aktuellen Marke - deren Ende ja durch das Erreichen des Vergleichswerts markiert wird - auswirkt.

Ändert sich die Drehzahl, d.h. die Periodendauer der Eingangsmarken, so wird automatisch auch die Ausgangsfrequenz entsprechend folgen - allerdings naturgemäß immer um eine Eingangsmarke verzögert. Über die gesamte Umdrehung betrachtet werden sich dabei besonders bei stärkeren Drehzahländerungen nicht nur laufende Abweichungen der Ausgangsmarken von ihrer theoretisch korrekten zeitlichen Position ergeben sondern auch kumulative Fehler, d.h. die Anzahl der erzeugten Marken pro Umdrehung stimmt nicht mit dem theoretischen Sollwert überein.

Aus diesem Grund wird im Schaltungsteil (D) kontinuierlich die Anzahl der erzeugten Marken seit dem letzten Umdrehungstrigger gezählt (Nmarks). Dieser Wert im Programmteil (E) des Signalprozessors mit dem theoretischen Sollwert verglichen, welcher im Programmteil (H) durch Zählen der Eingangsmarken (= Interrupts) und Multiplikation mit dem Vervielfachungsfaktor ermittelt wird. Um diese ermittelte Abweichung wird im Programmteil der Vorladewert der Schaltung (F) angepasst. Auf diese Weise würde sich - wenn sich die Drehzahl nicht weiter ändern würde - die aufgetretene Abweichung nach der nächsten Eingangsmarke ausgeglichen haben. Zur Genauigkeitserhöhung wird dabei erfindungsgemäß in Schaltung (D) wird auch der prozentuell abgelaufene Anteil der Periodendauer der aktuell Ausgangsmarke hochfrequent vermessen und dieser Wert (%Mark) ebenfalls dem Programmteil (E) zur verfeinerten Bestimmung der Soll-Ist Abweichung zugeführt.

Im Programmteil (C) werden die Zeitdauern der j letzten Eingangsmarken in einem Verschiebepuffer gespeichert. Bei jeder neuen Marke wird dabei die älteste wieder verworfen. Mit diesen Werten kann nun im Programmteil (G) eine Extrapolation durchgeführt werden. Im einfachsten Fall ist dies eine lineare Extrapolation, wobei eine Steigung aus dem ersten und letzen Wert gebildet wird. Je nach Rechenleistung des Signalprozessors kann aber auch eine Polynomapproximation durchgeführt werden und dieses Polynom zur Extrapolation herangezogen werden. Daraus ergibt sich eine erwartete Periodendauer für die nächste Eingangsmarke. Die Differenz dieser extrapolierten Dauer und der tatsächlichen Dauer der letzten Eingangsmarke wird im Programmteil (K) ebenfalls als Korrekturwert zur Anpassung des Vorladewerts der Schaltung (F) herangezogen .

Die Blöcke (A), (D) und (F) sind dabei in Form in frei programmierbaren Digitalbausteinen (FPGA) implementiert, die Blöcke (C), (B), (E), (G), (H) und (K) als Softwaremodule eines Signalprozessorsprogramms.

Da eine Soll-Ist Abweichung Folge einer Drehzahländerung ist, die wiederum auch in der Drehzahlextrapolation sichtbar wird, werden die ermittelten Korrekturwerte nicht dem im Programmteil (B) aus der Vervielfachung bestimmten Vorladewert der Schaltung (F) direkt hinzugeschlagen sondern jeweils mit einem Faktor versehen (k1 und k2). Damit kann das Regelverhalten von außen beeinflußt werden. Bei kleiner Vervielfachungzahl sollten die Faktoren auch kleiner gewählt werden. Für eine typische Vervielfachung von 6 Grad Eingangsmarken auf 0.1 Grad Ausgangsmarken ist ein Faktor von 0.5 für je k1 und k2 empfehlenswert.

## Patentansprüche

1. Verfahren zum Bereitstellen eines hochaufgelösten Winkelmarkensignals, wobei ein Winkelmarkensignal geringer Auflösung als auch ein Umdrehungstrigger erfasst werden, wobei letzterer auch aus einer Lücke im Winkelmarkensignal geringer Auflösung synthetisiert werden kann, und wobei aus den Winkelmarken geringer Auflösung Winkelmarken mit einer um einen vorgebbaren Vervielfachungsfaktor erhöhten Frequenz erzeugt werden, **dadurch gekennzeichnet, daß** die seit Auftreten des Umdrehungstriggers erzeugten Ausgangswinkelmarken hoher Auflösung laufend gezählt werden und dieser Zählwert jeweils beim Eintreffen einer neuen Eingangswinkelmarke mit dem durch Zählen der Eingangswinkelmarken seit dem Auftreten des Umdrehungstriggers und Multiplikation mit dem Vervielfachungsfaktor errechneten Wert verglichen wird, und dass die Frequenz der Ausgangswinkelmarken ab der neuen Eingangswinkelmarke in Abhängigkeit von dieser Abweichung korrigiert wird.

2. Verfahren nach Anspruch 1, **dadurch gekennzeichnet, daß** zusätzlich zur Anzahl der seit Auftreten des Umdrehungstriggers erzeugten Ausgangswinkelmarken hoher Auflösung auch der prozentuell abgelaufene Anteil der Periodendauer der aktuell anliegenden Ausgangswinkelmarke zum Zeitpunkt des Eintreffens einer neuen Eingangswinkelmarke ermittelt wird, dass die Frequenz der Ausgangswinkelmarken ab der neuen Eingangswinkelmarke weiter in Abhängigkeit von diesem verfeinerten Abweichungswert durchgeführt wird.

3. Verfahren nach einem der Ansprüche 1 oder 2, **dadurch gekennzeichnet, dass** zusätzlich die Periodendauern einer vorgebbaren Anzahl von Eingangswinkelmarken gespeichert werden, dass aus den gespeicherten Werten die Periodendauer der nächsten Eingangswinkelmarke extrapoliert wird, und dass die Frequenz der Ausgangswinkelmarken in Abhängigkeit von der Abweichung zwischen dem Wert der Periodendauer der letzen erfassten Eingangswinkelmarke und dem extrapolierten Wert der Periodendauer korrigiert wird.

4. Verfahren nach Anspruch 3, **dadurch gekennzeichnet, daß** die Periodendauer linear extrapoliert wird.

5. Verfahren nach Anspruch 3, **dadurch gekennzeichnet, daß** die Periodendauer durch Polynomapproximation extrapoliert wird.

6. Verfahren nach einem der Ansprüche 1 bis 5, **dadurch gekennzeichnet, daß** die Korrekturwerte für die Ausgangswinkelmarken mit vorgebbaren Faktoren verknüpft werden.

7. Verfahren nach Anspruch 6, **dadurch gekennzeichnet, daß** die Faktoren proportional zum Vervielfachungsfaktor für die Frequenz der Ausgangswinkelmarken eingestellt werden.

8. Verfahren nach einem der Ansprüche 1 bis 7, **dadurch gekennzeichnet, daß** die Anpassung der Frequenz der Ausgangswinkelmarken asynchron zu den erzeugten Ausgangswinkelmarken erfolgt.

9. Vorrichtung zur Durchführung des Verfahrens nach einem oder mehreren der Ansprüche 1 bis 8, mit einem Eingang für ein Winkelmarkensignal geringer Auflösung sowie ein Umdrehungstriggersignal, einem Modul (A) zur hochaufgelösten Vermessung der eingehenden Winkelmarkensignale, einem Markenerzeugermodul (F) zur Erzeugung von frequenzvervielfachten Winkelmarken, und einem Berechnungsmodul (B) zur Steuerung des Markenerzeugermoduls (F), **gekennzeichnet durch** ein Zählmodul (D) für die seit Auftreten des Umdrehungstriggersignals vom Markenerzeugermodul (F) erzeugten Ausgangswinkelmarken, einem Zählmodul (H) für die erfassten Eingangsmarken und einem Vergleichsmodul (E), in welchem die Anzahl der seit Auftreten des Umdrehungstriggers erzeugten Ausgangswinkelmarken hoher Auflösung jeweils beim Eintreffen einer neuen Eingangswinkelmarke mit dem **durch** Zählen der Eingangswinkelmarken seit dem Auftreten des Umdrehungstriggers und Multiplikation mit dem Vervielfachungsfaktor errechneten Wert verglichen wird, und welches Vergleichsmodul (E) einen Korrekturwert ermittelt, sowie ein Korrekturmodul (K) zur Korrektur der Einstellwerte des Markenerzeugermoduls (F) in Abhängigkeit vom Korrekturwert des Vergleichsmoduls (E).

10. Vorrichtung nach Anspruch 9, **dadurch gekennzeichnet, daß** im Zählmodul (D) zusätzlich auch der prozentuell abgelaufene Anteil der Periodendauer der aktuellen Ausgangsmarke zum Zeitpunkt des Eintreffens einer Eingangsmarke ermittelt wird und dieser Wert (%mark) ebenfalls dem Vergleichsmodul (E) zugeführt wird.

11. Vorrichtung nach Anspruch 9 oder 10, **gekennzeichnet durch** ein Puffermodul (C) zur Zwischenspeicherung der Periodendauern einer vorgebbaren Anzahl von Eingangsmarken, und ein Extrapolationsmodul (G), in welchem daraus eine zu erwartende Periodendauer für die nächste Eingangsmarke extrapoliert wird, wobei im Korrekturmodul (K) der Einstellwert für das Markenerzeugermodul (F) abhängig von der Differenz zwischen der extrapolierten Periodendauer und der tatsächlichen Periodendauer der letzen Marke korrigiert wird.

12. Vorrichtung nach einem der Ansprüche 9 bis 11, **dadurch gekennzeichnet, daß** das zumindest im Vergleichsmodul (E) und im Extrapolationsmodul (G) Abfrageroutinen implementiert sind, durch welche Werte eingegeben werden können, mit welchen die dem Korrekturmodul (K) zugeführten Werte verknüpft werden.

13. Vorrichtung nach einem der Ansprüche 9 bis 12, **dadurch gekennzeichnet, daß** das Zählmodul (D) als auch das Modul (A) zur hochaufgelösten Vermessung der eingehenden Winkelmarkensignale und das Markenerzeugermodul (F) zur Erzeugung von frequenzvervielfachten Winkelmarken als Schaltungsteile in einem freiprogrammierbaren GateArray (FPGA) ausgeführt sind.

14. Vorrichtung nach einem der Ansprüche 9 bis 13, **dadurch gekennzeichnet, daß** das Berechnungsmodul (B) zur Steuerung des Markenerzeugermoduls (F), das Zählmodul (H) für die erfassten Eingangsmarken, das Vergleichsmodul (E), das Korrekturmodul (K), das Puffermodul (C) und das Extrapolationsmodul (G) als Softwaremodule in einem Signalprozessor ausgeführt sind.
